(19) Europäisches Patentamt
European Patent Office
Office européen des brevets

(11) **EP 1 731 873 B1**

(12) **EUROPÄISCHE PATENTSCHRIFT**

(45) Veröffentlichungstag und Bekanntmachung des Hinweises auf die Patenterteilung:
**16.05.2012 Patentblatt 2012/20**

(51) Int Cl.:
***G01C 21/16*** *(2006.01)* ***G01C 21/20*** *(2006.01)*

(21) Anmeldenummer: **06011975.7**

(22) Anmeldetag: **09.06.2006**

(54) **Verfahren und Vorrichtung zur fahrzeugseitigen Berechnung der Länge einer zurückgelegten Wegstrecke**

Method and device for in-vehicle calculation of the length of a distance travelled

Procédé et dispositif destinés pour calculer la longueur d'une distance parcourue d'un véhicule

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.06.2005 DE 102005026853**

(43) Veröffentlichungstag der Anmeldung:
**13.12.2006 Patentblatt 2006/50**

(73) Patentinhaber: **Daimler AG**
**70327 Stuttgart (DE)**

(72) Erfinder:
• **Mezger, Klaus, Dr.**
**70184 Stuttgart (DE)**
• **Passegger, Thomas**
**72555 Metzingen (DE)**

(74) Vertreter: **JENSEN & SON**
**366-368 Old Street**
**London**
**EC1V 9LT (GB)**

(56) Entgegenhaltungen:
EP-A1- 0 838 660     EP-B1- 0 870 173
JP-A- 2001 280 984     US-B1- 6 453 238

EP 1 731 873 B1

**Beschreibung**

Die Erfindung betrifft ein Verfahren zur fahrzeugseitigen Berechnung der Länge einer zurückgelegten Wegstrecke gemäß dem Oberbegriff des Anspruchs 1 sowie eine entsprechende Vorrichtung gemäß dem Oberbegriff des Anspruchs 10.

Ortungsverfahren für Landfahrzeuge werden oft auf Basis von Funk- bzw. Satellitenortungsverfahren (z.B. GPS, GALILEO und/oder GLONASS) und integrierter Koppelortung ("dead reckoning") konzipiert. Dabei dient die zumeist auf Raddrehzahlmesser und Gierkreisel aufbauende Koppelortungskomponente dazu, die Fahrzeugtrajektorie auch dann zumindest näherungsweise weiterrechnen zu können, wenn der GPS-Empfang zeitweilig ausfällt. Zur allgemeinen Hintergrundinformation sei auf die EP 1 046 018 B1 verwiesen.

Entsprechende Verfahren werden bei Navigationssystemen, Trackingsystemen, aber auch bei der Erhebung von Straßenbenutzungsgebühren (Maut) eingesetzt. In letzterem Anwendungsfall ist oft die korrekte Vermessung bzw. möglichst gute Schätzung der zurückgelegten Wegstrecke eine wichtige Eingangsgröße für die Ermittlung der Gebühr. Andererseits ist es hier oft wünschenswert, Messungen ohne Anschluss an Fahrzeugsensoren wie z.B. Raddrehzahlmesser durchzuführen, da eine solche "fahrzeugunabhängige" Auslegung einen besonders einfachen Einbau im Fahrzeug ermöglicht.

Im Normalfall kann die Länge einer Wegstrecke recht gut per GPS oder bei dessen Ausfall bzw. Nichtverfügbarkeit mit einem Raddrehzahlmesser als am besten geeigneten Sensor gemessen werden. Wie beschrieben ist es nun aber wünschenswert, auf den Raddrehzahlmessers zu verzichten. An seiner Stelle wäre der Einsatz von Verfahren und kontaktlosen Sensoren wünschenswert, mit deren Hilfe die zurückgelegte Wegstrecke während eines GPS-Ausfalls ebenfalls einigermaßen korrekt berechenbar ist.

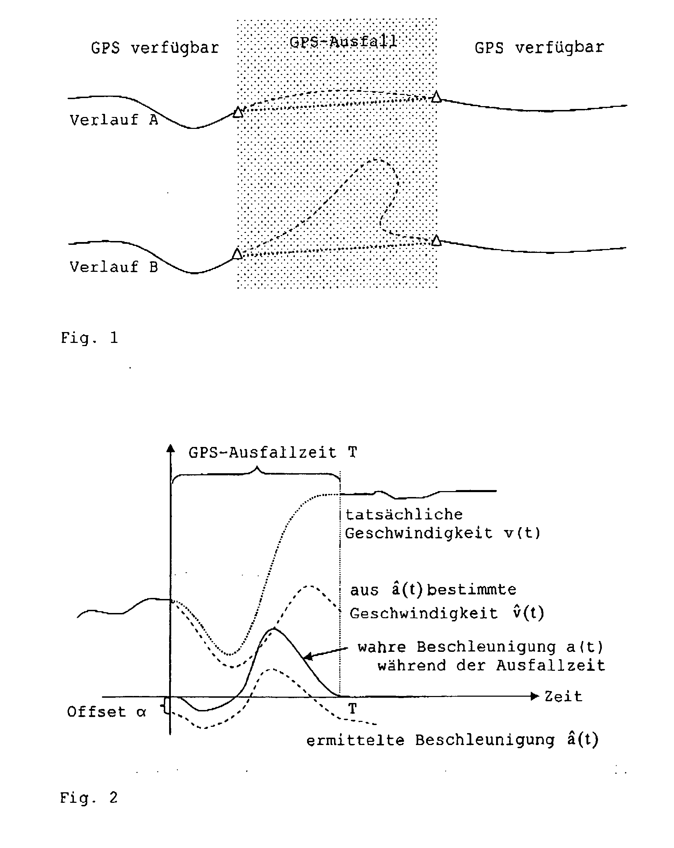

Eine nahe liegende Maßnahme wäre hier, die während eines GPS-Ausfalls zurückgelegte Wegstrecke aus der 'Luftlinie'-Punktdistanz zwischen der letzten GPS-Position vor und der ersten GPS-Position nach dem Ausfall anzunähern, wie beispielhaft in Fig. 1 dargestellt. Diese Abschätzung über die Luftliniendistanz ergibt auf jeden Fall eine Wegstreckenlänge, die kleiner oder gleich der tatsächlich zurückgelegten Wegstreckenlänge ist.

Als fahrzeugunabhängige und preiswerte Sensoren, die sich für eine Stützung der Wegstreckenmessung empfehlen, kommen in diesem Zusammenhang vor allem in Fahrtrichtung montierte Beschleunigungsgeber in Frage. Durch die zweimalige Integration des Beschleunigungssignals ergibt sich die Länge der zurückgelegten Wegstrecke. Dabei wirkt allerdings der unbekannte Offsetfehler des Beschleunigungsgebers als eine wesentliche Fehlerquelle. Auch eine eventuelle Neigung oder Steigung der Wegstrecke wirkt sich verfälschend auf die Messung aus, da sie im Messsystem ebenfalls wie ein Offset auf das Beschleunigungssignal wahrnehmbar ist. Insofern kann diese ähnlich behandelt werden wie der Offsetfehler des Beschleunigungsgebers selbst. Im Folgenden sollen mit dem Begriff Offset der unbekannte Offsetfehler des Beschleunigungsgebers und/oder weitere Verfälschungen der Messung bezeichnet werden. Die Wirkung eines Offsets $\alpha$ ist in Fig. 2 schematisch dargestellt.

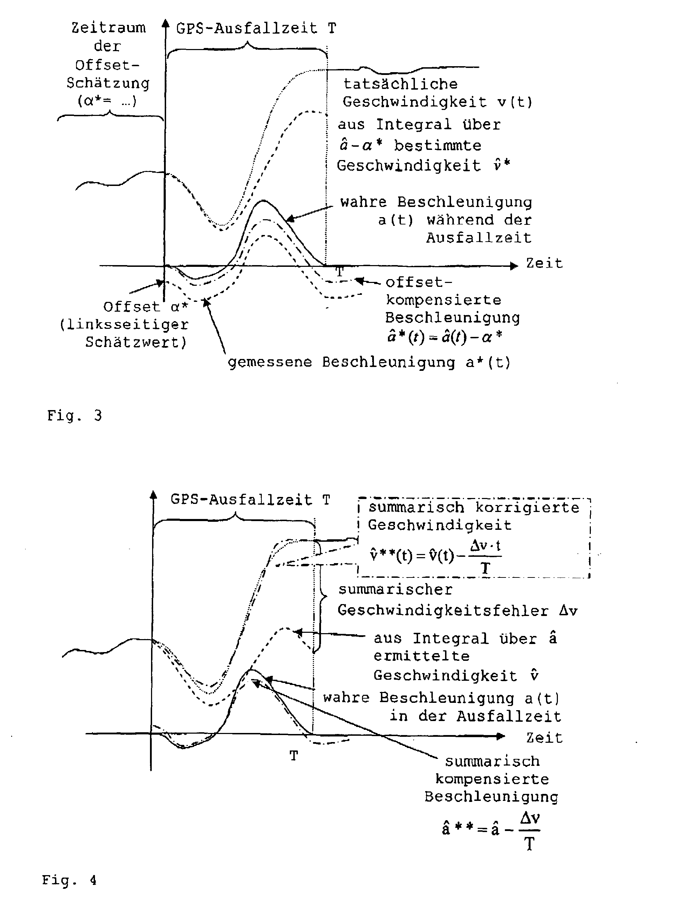

In gängigen Navigationssystemen mit Beschleunigungsgebern (Trägheitsnavigationssystemen) wird versucht, den zumeist nur langsam veränderlichen Offset des Beschleunigungsgebers aus Signalverläufen von Beschleunigungsgeber und GPS-Empfänger vor dem GPS-Ausfall zu schätzen und diesen Offsetwert als Konstante $\alpha^*$ bei der Integration der Beschleunigung zur Geschwindigkeit und dann zur Wegstrecke herauszurechnen. Mit diesem bekannten Verfahren kann der verbleibende Fehler bereits reduziert werden, siehe Fig. 3.

Jedoch wird sich der tatsächliche Offset des Beschleunigungsgebers als zeitabhängiger Offsetwert $\alpha(t)$ vom Zeitpunkt des Beginns des Ausfalls an weiter verändern. Dies verursacht eine entsprechende Drift in der Geschwindigkeits- bzw. Wegeermittlung und damit eine falsche Wegstreckenlänge.

Aus der D1 ist ein Verfahren zur fahrzeugseitigen Berechnung der Länge einer zurückgelegten Wegstrecke bekannt, bei dem für Zeiträume der fahrzeugseitigen Verfügbarkeit infrastrukturgestützter Positionsdaten die Länge der Wegstrecke aus den Positionsdaten und über eine zeitliche Integration der Geschwindigkeitsdaten berechnet wird und für Zeiträume der Nichtverfügbarkeit dieser Daten ein Schätzgeschwindigkeitsverlauf durch zeitliche Integration fahrzeugseitig ermittelter Längsbeschleunigungswerte bestimmt wird. Bei anschließender Wiederverfügbarkeit dieser Daten erfolgt eine Offsetkompensation.

Ausgehend von diesem Problem besteht die Aufgabe der Erfindung darin, ein Verfahren vorzuschlagen, das die Genauigkeit der bekannten Berechnung der Wegstreckenlänge weiter verbessert. Eine weitere Aufgabe besteht darin, eine entsprechende Vorrichtung anzugeben.

Diese Aufgaben werden gelöst durch ein Verfahren mit den Merkmalen des Anspruchs 1 sowie durch eine Vorrichtung mit den Merkmalen des Anspruchs 10.

Die Erfindung beruht auf der Erkenntnis, dass in verschiedenen Anwendungen der Ortung, insbesondere bei der Ermittlung von Straßenbenutzungsgebühren, die zu bestimmenden Größen Beschleunigung a, Geschwindigkeit v und Weg s der betrachteten Anwendung nicht sofort, d.h. schon während der GPS-Ausfallzeit, zur Verfügung stehen müssen. Denn bei solchen Anwendungen ist es ausreichend, wenn die Berechnung insbesondere der während des GPS-Ausfalls zurückgelegten Wegstreckenlänge erst "im Nachhinein" erfolgt, also nachdem GPS wieder verfügbar ist.

Damit ist dann eine korrekte Mauterhebung sichergestellt. Dieser Umstand kann nun dazu genutzt werden, um durch ein summarisches Korrigieren des Offsets zu einem besseren Ergebnis zu kommen, als es mit der Verwendung des vor dem GPS-Ausfall geschätzten "linksseitigen" Offsetwertes $\alpha^*$ entsprechend Fig. 3 möglich wäre.

Summarisch heißt hier, dass die Geschwindigkeit - ausgehend von einem "letzten", d.h. vor dem GPS-Ausfall gemessenen Wert - durch Integration der ermittelten Beschleunigung in an sich bekannter Weise, siehe Fig. 3, hochgerechnet wird. Bei Wiederverfügbarkeit von GPS wird dann festgestellt, wie groß die Abweichung zwischen der nun wieder messbaren "wahren" (GPS-)Geschwindigkeit v(t) und der aus der ermittelten Beschleunigung â(t) bestimmten Geschwindigkeit v(t) ist.

Die Ursache für die Abweichung, d.h. der insgesamt festgestellte Geschwindigkeitsfehler $\Delta v$, wird dem nicht kompensierten Offset zugeschrieben. Anstelle der Nutzung einer linksseitigen Offset-Schätzung $\alpha^*$ entsprechend Fig. 3 wird hier nachträglich ein besserer Wert $\hat{\alpha}^{**}$ für den Offset analytisch berechnet, der den summarischen Fehler der Geschwindigkeitsschätzung verschwinden lässt, siehe Fig. 4.

Setzt man für den Offset den nachträglich bestimmten Wert $\hat{\alpha}^{**} = \Delta v/\Upsilon$ an, ergibt sich ein Schätzgeschwindigkeitsverlauf $\hat{v}^{**}$, der bei t=T genau die wahre Geschwindigkeit trifft. Dies war in dem bekannten Ansatz mit einem linksseitigen Schätzwert entsprechend Fig. 3 gerade nicht gegeben. Der Offset-Wert wird nun also nicht nur aus der Vorgeschichte des GPS-Ausfalls bestimmt, sondern im Nachhinein aus der Stetigkeitsbedingung $\hat{v}^{**}(T)=v(T)$ . Daraus leiten sich die folgenden, sehr einfachen algebraischen Korrekturformeln ab:

$$\hat{\alpha}^{**} = \frac{\Delta v}{T} = \text{const.}$$

$$\hat{a}^{**}(t) = \hat{a}(t) - \hat{\alpha}^{**}$$

$$\hat{v}^{**}(t) = \hat{v}(t) - \frac{\Delta v \cdot t}{T} \qquad\qquad \rightarrow \quad \hat{v}^{**}(T) = \hat{v}(T) - \Delta v$$

$$\hat{s}^{**}(t) = \hat{s}(t) - \frac{\Delta v \cdot t^2}{2 \cdot T} \qquad\qquad \rightarrow \quad \hat{s}^{**}(T) = \hat{s}(T) - \frac{\Delta v \cdot T}{2}$$

Wird nun dieser Offset-Schätzwert $\hat{\alpha}^{**}$ zur Kompensation berücksichtigt, so ergibt sich eine geschätzte Endgeschwindigkeit $\hat{v}^{**}(T)$, bei der der Fehler $\Delta v$ gerade kompensiert ist, d.h. dass die Schätzgeschwindigkeit bei Wiederverfügbarkeit von GPS der gemessenen Geschwindigkeit genau entspricht.

Die obigen Gleichungen für die während des Ausfalls ermittelte Wegstrecke $\hat{s}^{**}$ zeigen, dass durch die summarische Kompensation der aus dem gemessenen Beschleunigungswert â(t) durch zweimalige Integration bestimmte Wegstrecke $\hat{s}(t)$ nun nicht nochmals erneut integriert werden muss, sondern durch Anbringen der summarischen Korrektur $\Delta v^*T/2$ nachträglich berichtigbar ist.

Bei bekannten Verfahren entsprechend Fig. 3 ist erkennbar, dass zwar Offsetfehler nullter Ordnung (d.h. der Konstant-Anteil) kompensiert werden, dass aber eine Abweichung zwischen den Werten der tatsächlichen und der geschätzten Geschwindigkeit innerhalb des Ausfallfensters verbleibt (Fehlerverlauf erster Ordnung). Das erfindungsgemäße Verfahren kompensiert auch den Fehlereffekt erster Ordnung, siehe Fig. 4. Damit verbleiben im $\hat{v}^{**}$-Verlauf nur noch Fehler zweiter und höherer Ordnung, siehe strichpunktierte Linie in Fig. 4.

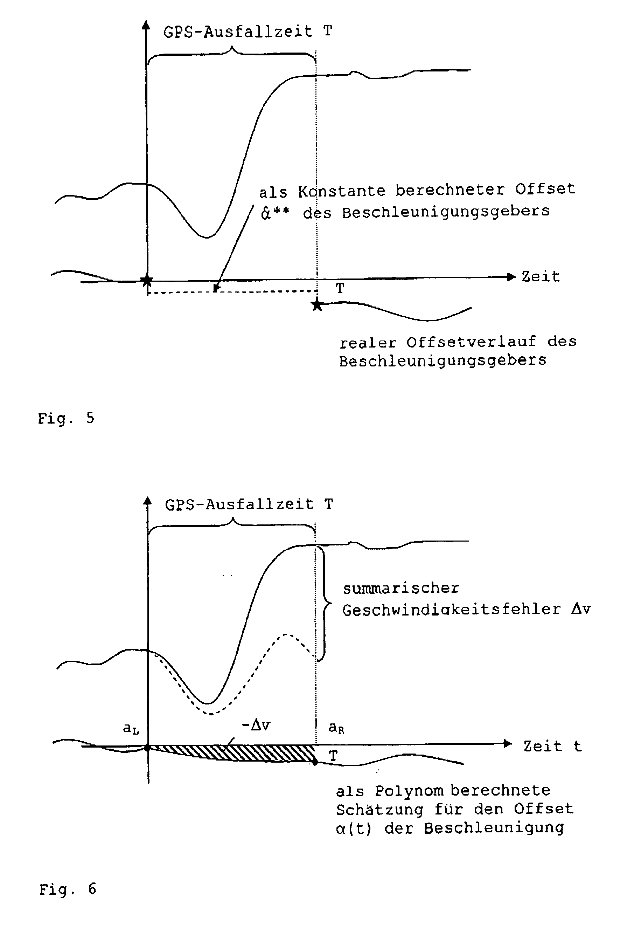

Erfindungsgemäß werden durch Einsatz der Randbedingung für die Geschwindigkeitsschätzung die Fehlereinflüsse des Offsets von Beschleunigungsgebern bereits stark reduziert. Eine besonders einfache Korrekturmöglichkeit ergibt sich dabei, wenn ein über die gesamte Ausfallzeit als konstant angesetzter Offsetwert $\hat{\alpha}^{**}$ beispielsweise gemäß Fig. 5 berechnet wird. Dieser Wert führt zur Kompensation des Geschwindigkeitsfehlers an beiden 'Ufern' der Ausfallzeit, d.h. sowohl beim Wechsel von der Verfügbarkeit von GPS zur Nichtverfügbarkeit als auch beim Wechsel von der Nichtverfügbarkeit von GPS zur Verfügbarkeit. Allerdings besteht die Einschränkung, dass nur ein zeitlich konstanter Wert für den Offset ermittelt wird.

Nun werden die realen Offsets vor und nach dem Ausfall jedoch unterschiedliche Werte annehmen und während des Ausfalls vom einen zum anderen Wert driften, siehe die Sternsymbole in Fig. 5. Diese Werte am linken und rechten 'Ufer' (Randwerte bzw. -bedingungen) lassen sich nachträglich durch Vergleich mit den Verläufen der GPS-Geschwindigkeit bestimmen. Ein realistischerer, weiter verbesserter Verlauf der Offset-Schätzung sollte nun unter Einbeziehung dieser Information folgenden Bedingungen genügen:

- am linken Ufer dem vor Ausfall bestimmten Offsetwert $\alpha_L$ entsprechen, sowie
- am rechten Ufer dem nach Ausfall bestimmbaren Offsetwert $\alpha_R$ entsprechen und
- derart gewählt werden, dass der summarische Geschwindigkeitsfehler $\Delta v$ am rechten Ufer kompensiert wird.

Anstelle des konstanten Offsetwertes, d.h. nur eines Parameters, wird nun eine analytische, insbesondere eine stetige, Funktion angesetzt. Da hier drei Bedingungen vorgegeben sind, wird günstigerweise eine dreiparametrige Funktion, z.B. ein Polynom zweiter Ordnung, bestimmt. Dieses erfüllt dann alle drei Bedingungen und bildet damit die realen Verhältnisse noch besser nach. Im Fall der Modellierung des Offsets als Polynom zweiter Ordnung gemäß $\hat{\alpha}(t)$ $= c_0 + c_1 \cdot t + c_2 \cdot t^2$

wäre dies durch die folgenden Bestimmungsgleichungen erreicht:

$\hat{\alpha}(0) = \alpha_L$ (linksseitiger Randwert) $\rightarrow c_0 = \alpha_L$

$\hat{\alpha}(T) = \alpha_R$ (rechtsseitiger Randwert) $\rightarrow c_0 + c_1 T + c_2 T^2 = \alpha_R$

$$\int_0^T \hat{\alpha}(t)\,dt = -\Delta v \quad \text{(rechtsseitige Anschlussbedingung der Geschwindigkeit)}$$

$$\rightarrow c_0 T + \frac{c_1 T^2}{2} + \frac{c_2 T^3}{3} = -\Delta v$$

Hier ist $c_0$ direkt bestimmt, während $c_1$ und $c_2$ sich aus der Auswertung der beiden letzten Gleichungen algebraisch ergeben, siehe Fig. 6.

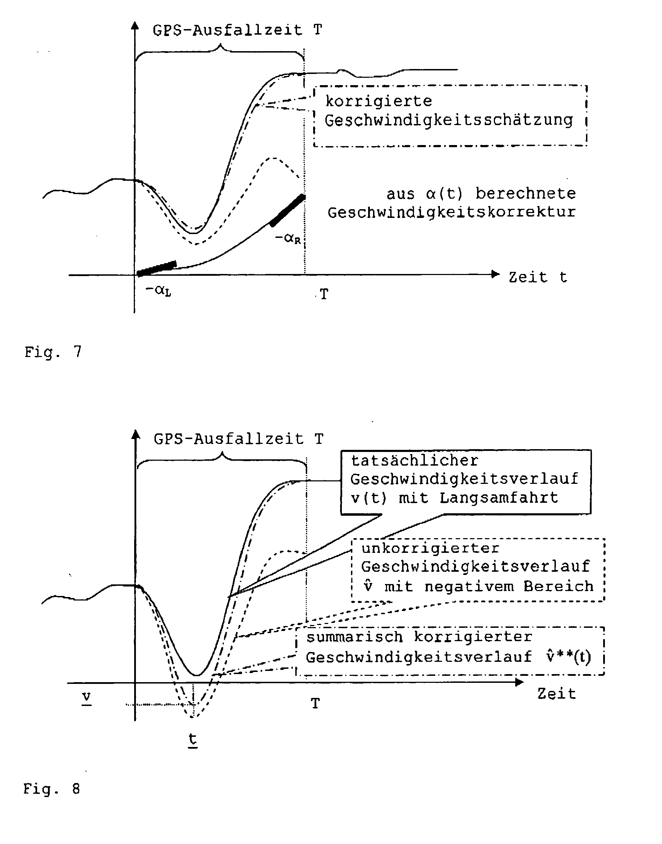

Bei längeren GPS-Ausfällen kann es nun auftreten, dass der Offset im Ausfallzeitraum so weit auswandert, dass unplausible Schätzgeschwindigkeiten entstehen, beispielsweise negative Geschwindigkeiten oder solche, die größer als die Maximalgeschwindigkeit des Fahrzeugs sind. Dies ist beispielhaft in Fig. 8 dargestellt.

Zum Ausgleich werden die Korrekturmaßnahmen derart weiter gebildet, dass die Geschwindigkeitsrandbedingungen bei t=0 und t=T und ggfs. auch die Beschleunigungsrandbedingungen entsprechend den vorstehenden Ausführungen getroffen werden, und zusätzlich auch der negative Geschwindigkeitsbereich beseitigt wird.

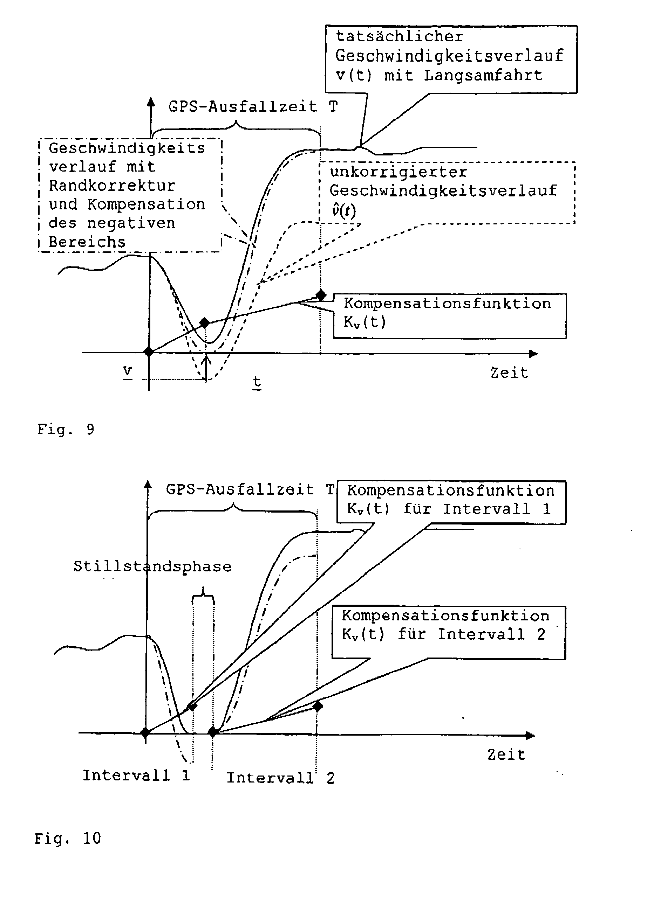

Wenn mit weiteren Verfahren ermittelt werden kann, dass das Fahrzeug ruht (d.h. v=0) kann entsprechend für diese Stillstandsphase eine Zwangsbedingung v=0 festgelegt werden. Ein Stillstand kann z.B. detektiert werden aus sehr niedrigen Signalpegeln des Beschleunigungsgebers. Hier kann ganz entsprechend so verfahren werden, als läge eine GPS-Geschwindigkeitsmessung mit v=0 vor, d.h. das Intervall der Geschwindigkeitsschätzung über Beschleunigungsgeber wird an dem Stillstandspunkt mit dem rechten Randwert v=0 abgeschlossen. Sollte das Fahrzeug weiterfahren, ohne dass der GPS-Empfang inzwischen wieder aufgenommen wurde, wird ein neues Schätzintervall mit dem linken Randwert $v_0 = 0$ begonnen, siehe Fig. 10.

Zusammengefasst ergeben sich die folgenden Verfahrensoptionen für eine verbesserte Streckenschätzung bei GPS-Ausfall. Während der Verfügbarkeit des GPS-Signals wird die von einem Fahrzeug zurückgelegte Strecke mit hoher Genauigkeit aus der zeitlichen Integration der GPS-Geschwindigkeit abgeleitet. Diese Möglichkeit ist wegen ihrer Robustheit gegen Fehler der Berechnung aus der Summe von GPS-Positionsdistanzen vorzuziehen. Gelegentliche Ausfälle des GPS-Empfangs, z.B. unter Brücken, in Tunnels, bei Geländeeinschnitten oder in stark bebauter innerstädtischer Umgebung, führen zu entsprechenden Ausfällen einer solchen GPS-gestützten Wegmessung. Als Möglichkeit zur näherungsweisen Bestimmung des während des Ausfalls zurückgelegten Weges bieten sich zur Nutzung an:

(a) die Vermessung des Weges über die Integration einer Odometermessung

(b) die Abschätzung der Distanz über die Luftlinienentfernung der letzten Position vor GPS-Ausfall mit der ersten Position nach GPS-Wiederaufnahme.

(c) die Bestimmung des Geschwindigkeitsprofils aus der Integration der Längsbeschleunigung einer Beschleunigungsgeber-Messung.

Aus den eingangs erwähnten Gründen muss auf die qualitätsseitig überlegene Alternative (a) verzichtet werden, so dass sich eine Verfahrenskombination aus (b) und (c) empfiehlt. Dabei sollte eine Wegberechnung zunächst nach dem Verfahren (c) erfolgen, wobei die notwendige, zweifache Integration des Messsignals bei längeren Ausfallzeiten zunehmend fehlerbehaftet sein wird. Für die Nutzbarkeit der Beschleunigungsmessung über längere zu überbrückende Zeitspannen sollte das Verfahren um eine möglichst hochwertige Offset-Schätzung ergänzt werden. Die kombiniert zu nutzenden Optionen für die Verbesserung der Offset-Schätzung werden in den obigen Abschnitten aus dem Stand der Technik abgeleitet bzw. als neue Lösungen vorgeschlagen und einzeln diskutiert. Weiterhin bietet sich an, die als drittes dargestellte Option der Luftlinienschätzung (b) als untere Grenze für die nach (c) ermittelte Wegstrecke anzusetzen.

Bevorzugte Ausführungsform der Erfindung

Die vorgeschlagenen Einzelmaßnahmen werden in einem Gesamtkonzept integriert, was im Folgenden zusammenfassend dargestellt wird. Dabei werden folgende Funktionskomponenten genutzt:

1. Luftlinienberechnung entsprechend Punkt (b) oben
2. Fahrzeug-Stillstandserkennung (auf Basis von Signalpegelbeobachtung des Beschleunigungsgebers oder eines evtl. vorhandenen Gyroskops)
3. Streckenberechnung durch doppelte Integration der Beschleunigung und weit gehende Kompensation des Offsetfehlers durch

3.1 Ermittlung des links- und rechtsseitigen Geberoffsets aus Vergleich mit den GPS-Messungen
3.2 Treffen der Randbedingung v(T) durch summarische Kompensation
3.3 Kompensation unplausibler Geschwindigkeiten <0 bzw. >$v_{limit}$ im Schätzverlauf

Zur Kombination dieser Module sind folgende Abläufe vorzusehen:

a. Wenn GPS-Empfang verfügbar: Ermitteln des Fahrweges durch Integration der GPS-Geschwindigkeit

b. Bei und während GPS-Ausfall:

- Ermitteln/Speichern von GPS-Geschwindigkeit, GPS-Positionen und Beschleunigungsgeber-Offset $\alpha_L$ kurz vor GPS-Ausfall

- Während der Ausfallzeit: Berechnung einer ersten Geschwindigkeits- und Wegschätzung durch ein- bzw. zweifache Integration des Beschleunigungsgebersignals

c. Bei Feststellung eines Fahrzeugstillstands während der Ausfallzeit (s. Punkt 2. oben):

- Einfrieren der Wege- und Geschwindigkeitsintegration;

- Rücksetzen der Geschwindigkeitsschätzung auf 0;

- direkte Bestimmung des Beschleunigungsgeberoffsets aus dem Messsignal.

- Korrektur der Wege- und Geschwindigkeitsschätzung der vorangegangenen Ausfallzeit (siehe Punkt e. unten)

d. Bei GPS-Wiederaufnahme:

- Einfrieren der Wege- und Geschwindigkeitsintegration;

- Ermitteln des Beschleunigungsgeberoffsets $\alpha_R$ unmittelbar nach Wiederaufnahme aus Vergleich mit GPS-Geschwindigkeit

- Korrektur der Wege- und Geschwindigkeitsschätzung der vorangegangenen Ausfallzeit (siehe Punkt e. unten)

e. Korrektur der Geschwindigkeitsschätzung mit einer analytischen Funktion, durch die Zwangsbedingungen aus der folgenden Auswahl eingehalten werden:

- Kompensationsprofil $K_v(t)$ mit links- und rechtsseitigem Randwert aus summarischer Korrektur (links :=0, rechts: Schätzgeschwindigkeit (T) + Kompensationsprofil $K_v(T)$ muss gleich der gemessenen Geschwindigkeit $V_{GPS}$ (T) sein)

- Treffen des Links- und rechtsseitigen Offsets des Beschleunigungsgebers $\alpha_L$ bzw. $\alpha_R$ (führt auf Zwangsbedingung für die Ableitung des Korrekturprofils K(t)am jeweiligen Punkt)

- Falls lokale Maxima oder Minima des korrigierten v-Profils Werte $v > v_{limit}$ oder $v < 0$ erreichen, muss ein Korrekturprofil erneut berechnet werden, durch das an diesen Punkten $v = v_{limit}$ bzw. $v = 0$ erzwungen wird

f. Unmittelbar nach Ende eines GPS-Ausfalls:

- Überprüfen des Gesamtweges seit GPS-Ausfall auf Minimumbedingung über Luftlinie zwischen GPS-Positionen vor und nach Ausfall (Gesamtweg $\geq$ Luftlinie !)

Die Erfindung wird nun anhand einer Zeichnung erläutert. Dabei zeigen:

Fig. 1 Luftlinien-Streckenabschätzung aus Positionen vor und nach einem GPS-Ausfall;
Fig. 2 Geschwindigkeitsschätzung als Integral der gemessenen, mit Offset verfälschten Beschleunigung;
Fig. 3 Geschwindigkeitsschätzung durch Integrieren der gemessenen Beschleunigung, kompensiert um den vor Ausfall geschätzten "linksseitigen" Offset;
Fig. 4 Ableitung und Korrektur des summarischen Geschwindigkeitsfehlers;
Fig. 5 konstanter Offset beim summarischen Geschwindigkeitsfehler;
Fig. 6 variabler Offset beim summarischen Geschwindigkeitsfehler;
Fig. 7 Darstellung der Geschwindigkeitskorrektur für die Situation aus Fig. 6;
Fig. 8 temporäres negatives Auswandern des Beschleunigungsoffsets und daraus resultierender unplausibler Verlauf der Schätzgeschwindigkeit;
Fig. 9 Kompensation der der unplausiblen negativen Schätzgeschwindigkeit;
Fig. 10 Intervallteilung der Geschwindigkeitsschätzung bei Stillstandserkennung während des GPS-Ausfalls
Fig. 11 Korrekturfunktion der Geschwindigkeit mit verschiedenen Zwangsbedingungen.

In Fig. 1 sind zwei beispielhafte Streckenverläufe A und B dargestellt. Jeweils im punktierten Bereich ist kein GPS verfügbar, während davor und danach GPS verfügbar ist. Zwei Luftlinien-Streckenabschätzungen werden aus durch Dreieckssymbole gekennzeichneten Positionen vor und nach dem GPS-Ausfall gewonnen. Die tatsächlichen Wegstrecken sind jeweils strichliert und die Luftlinien-Streckenabschätzungen jeweils punktiert aufgetragen.

Mit dem Szenario des Streckenverlaufs A ist eine Situation dargestellt, in der die Luftlinienschätzung recht nahe an die tatsächlich zurückgelegte Strecke herankommt. Solche Situationen dürften für reine Autobahnfahrten, außer in Ein/Ausfahrten und Knoten, sowie auch für typische Tunneldurchfahrten gegeben sein. Währenddessen sind Streckenverläufe des Typs B eher im untergeordneten Netz, in urbanem Umfeld oder in gebirgigen Regionen zu erwarten. Hier ist mit recht großen Verkürzungsfehlern zu rechnen, die nur mit dem Einsatz von weiteren Sensoren vermeidbar sind.

Fig. 2 zeigt beispielhaft mehrere Signalverläufe über der Zeit aufgetragen. Dabei ist bis zum Zeitpunkt t=0 GPS verfügbar, ab t=0 bis t=T ist GPS-Ausfall, danach ist GPS wieder verfügbar. Die durch einen Beschleunigungsgeber ermittelte Beschleunigung â(t) ist als strichlierte Linie und die tatsächlich gemessene (GPS-)Geschwindigkeit v(t) ist als durchgezogene Linie aufgetragen. Als zeitliches Integral von â(t) ergibt sich die ebenfalls strichliert aufgetragene Schätzgeschwindigkeit v(t).

Die oberste Kurve zeigt die tatsächliche Geschwindigkeit v(t), wie sie vor bzw. nach dem GPS-Ausfall per Messung ermittelbar ist (durchgezogene Linie), die jedoch während des GPS-Ausfalls nicht direkt zugänglich ist (punktierte Linie). Die durchgezogene Kurve unten zeigt die wahre Beschleunigung a(t) während der Ausfallzeit, die jedoch wegen der typischen Sensorfehler nur um einen Offsetfehler $\alpha$(t) verfälscht gemessen werden kann. Die im Bild strichliert dargestellte, gemessene Beschleunigung â(t) ist also â(t)=a(t)+$\alpha$(t). Würde nun zur Bestimmung der Schätzgeschwindigkeit v(t) direkt das zeitliche Integral der gemessenen - fehlerhaften-Beschleunigung â(t) herangezogen, so ergäbe sich als - ebenfalls fehlerhafter - Geschwindigkeitsverlauf $\hat{v}$(t) die strichlierte obere Kurve.

Es ist deutlich erkennbar, dass Abweichungen zwischen der Schätzgeschwindigkeit v(t) und der tatsächlichen Geschwindigkeit v(t) auftreten. Diese Verfälschungen werden durch den Offsetfehler $\alpha$(t) des Beschleunigungsgebers verursacht. Dargestellt sind hier nur die jeweiligen Verläufe von Beschleunigung und Geschwindigkeit. Der Weg $\hat{s}$(t) ergäbe sich aus der weiteren Integration von $\hat{v}$(t) über die Zeit t.

Fig. 3 stellte das aus dem Stand der Technik bekannte Vorgehen zur korrigierten Geschwindigkeitsschätzung aufbauend auf den Signalverläufen aus Fig. 2 vor. Die verwendeten Bezeichnungen und Kurven sind teilweise identisch. Die ermittelte Beschleunigung wird dabei kompensiert um den vor der Nichtverfügbarkeit von GPS geschätzten "linksseitigen" Offset. Zwar ist der Offset $\alpha$ nicht mit seinem gesamten Zeitverlauf bekannt, aber es kann auf eine Offset-Schätzung $\alpha^*$ aus der Vorgeschichte bis zum Beginn des GPS-Ausfalls zurückgegriffen werden. Damit wird eine erste Kompensation des Offsetfehlers in der darauf folgenden Ausfallphase erreicht, durch die die geschätzte Geschwindigkeit im Normalfall bereits wesentlich näher an der Realität liegt als im völlig unkompensierten Fall. Dies ist erkennbar aus dem Vergleich des Verlaufs von v(t) - als dem unkompensierten Geschwindigkeitsprofil aus Fig. 2 - mit dem Verlauf von $\hat{v}^*$ - als dem um den linksseitigen, konstanten Offsetwert $\alpha^*$ kompensierten Geschwindigkeitsprofil aus Fig. 3.

In Fig. 3 ist allerdings auch erkennbar, dass der Offset des Beschleunigungsgebers eben nicht konstant ist, sondern sich tatsächlich vom Zeitpunkt des Ausfallsbeginns bei t=0 an weiter verändert, hier in negativer Richtung. Dies führt dann zu einer entsprechenden Drift bei der Geschwindigkeits- bzw. Wegeermittlung. In Fig. 3 ist dies in Form von zu kleinen Werten der bestimmten Geschwindigkeit (Schätzgeschwindigkeit) $\hat{v}^*$ erkennbar. Die tatsächliche Geschwindigkeit v(t) während der Nichtverfügbarkeit von GPS ist wiederum punktiert und die wahre Beschleunigung a(t) während der Nichtverfügbarkeit von GPS ist wiederum durchgezogen aufgetragen. Die fehlerhaften Werte resultieren damit in einer unterschätzten Länge der Wegstrecke.

Fig. 4 stellt die erfindungsgemäße Ableitung und Korrektur des summarischen Geschwindigkeitsfehlers vor, wiederum aufbauend auf den Signalverläufen aus Fig. 2 bzw. 3 und mit teilweise identisch verwendeten Bezeichnungen und Kurven. Dargestellt ist der summarischen Geschwindigkeitsfehler $\Delta v$ zum Zeitpunkt der GPS-Wiederverfügbarkeit t=T. Der Verlauf der Schätzgeschwindigkeit $\hat{v}(t)$ während der Nichtverfügbarkeit von GPS ist strichliert und der Verlauf der tatsächlichen Geschwindigkeit v(t) während der Verfügbarkeit von GPS ist durchgezogen aufgetragen. Der Geschwindigkeitsfehler $\Delta v$ entspricht dem Unterschied zwischen den Werten der Schätzgeschwindigkeit v(T) und der tatsächlichen Geschwindigkeit v(T). Die Korrektur erfolgt nun derart, dass dieser Geschwindigkeitsfehler $\Delta v$ bei t=T gerade kompensiert wird, d.h. die Schätzgeschwindigkeit bei Wiederverfügbarkeit von GPS entspricht genau der tatsächlichen Geschwindigkeit. Setzt man für den Offset den nachträglich bestimmten Wert $\hat{\alpha}^{**} = \Delta v/T$ an, ergibt sich ein strichpunktiert eingezeichneter Verlauf der summarisch korrigierten Geschwindigkeit, der bei t=T gerade die wahre Geschwindigkeit trifft.

Fig. 5 zeigt die Ableitung und Korrektur des summarischen Geschwindigkeitsfehlers als Konstante. Diese besonders einfache Realisierung der Erfindung baut wiederum auf den Signalverläufen aus Fig. 2 bis 4 auf, mit teilweise identisch verwendeten Bezeichnungen und Kurven. Mithin wird ein über die gesamte Ausfallzeit als konstant angesetzter, strichliert aufgetragener Offsetwert berechnet ist. Die Sternsymbole zeigen die jeweiligen Werte des realen Offsets vor und nach dem GPS-Ausfall. Diese Werte am linken und rechten 'Ufer' werden nachträglich durch Vergleich mit den Verläufen der GPS-Geschwindigkeit bestimmt.

In Fig. 6 ist die Ableitung und Korrektur des summarischen Geschwindigkeitsfehlers als analytische Funktion, nämlich als ein Polynom zweiter Ordnung, dargestellt. Derart werden die realen Verhältnisse besonders gut nachgebildet. Es wird wiederum ausgegangen von den Signalverläufen aus Fig. 2 bis 4, mit teilweise identisch verwendeten Bezeichnungen und Kurven. Dabei wird sowohl ein stetiger Übergang der Offsets an beiden Ufern als auch das Einhalten der Anschlussbedingung für die Geschwindigkeit bei t=T sichergestellt. Der Verlauf der Geschwindigkeit, die durchgezogene obere Linie, ergibt sich als stetige Funktion.

Die Berücksichtigung des dargestellten, nachträglich berechneten zeitvariablen Offsets, siehe die strichlierte Fläche, führt zu einer Korrekturfunktion der Geschwindigkeit, die sich analytisch aus dem Zeitintegral der Offsetfunktion berechnet und ebenfalls im Zeitdiagramm darstellbar ist, siehe Fig. 7. In der Korrekturfunktion $K_v$ treten die Randwerte $\alpha_L$ und $\alpha_R$ der Offsets des Beschleunigungsgebers als Vorgaben für die zeitlichen Ableitungen $\dot{K}_v$ am rechten und linken Rand auf, wie in Fig. 7 durch die dicken Striche symbolisiert. Die Korrekturfunktion $K_v(t)$ selbst erreicht für t=T gerade den Wert des Geschwindigkeitsfehlers $\Delta v$.

Fig. 8 zeigt den Effekt des Auswanderns des Offsets bei längeren GPS-Ausfällen. Durchgezogen gezeichnet ist der tatsächliche Geschwindigkeitsverlauf, wobei zum Zeitpunkt t=<u>t</u> eine besonders niedrige Geschwindigkeit vorliegt. Es ist hierbei zu erkennen, dass der strichpunktiert dargestellte Schätzgeschwindigkeitsverlauf $\hat{v}^{**}$ zwar bereits die linke und rechte Randbedingung trifft. Jedoch wandert er innerhalb des Ausfallbereichs so stark nach unten aus, dass negative Geschwindigkeiten geschätzt werden. Der Offset der Beschleunigung wird dabei zu Beginn offenbar unterschätzt, was im zweiten Abschnitt durch eine Überschätzung insgesamt wieder ausgeglichen wird. Als Resultat ergibt sich im mittleren Bereich des Ausfallbereichs ein Abschnitt negativer Schätzgeschwindigkeiten. Dieser für die gegebene Anwendung offensichtlich unplausible Verlauf wird zu einer insgesamt zu niedrigen Wegschätzung führen.

In Fig. 9 ist als durchgezogene Linie zwischen drei soliden Rauten die als Polygon angesetzte Kompensationsfunktion $K_v(t)$ für das Szenario aus Fig. 8 gezeichnet. Es ist ersichtlich, wie diese einerseits den 'negativen Bauch' beseitigt und andererseits die Randbedingung bei t=T trifft.

Anstatt eine über den Zeitraum des GPS-Ausfalls linear anwachsende Geschwindigkeitskorrektur zu berechnen, wie mit dem summarischen Korrekturterm

$$-\frac{\Delta v}{T} \cdot t$$

gemäß Fig. 4, muss die Korrektur nun sowohl den 'unplausibelsten' Geschwindigkeitswert $\underline{v}$ bei $\underline{t}$ kompensieren, als auch die Randbedingung $\hat{v}(t)$-$\Delta v$ erreichen. Die einfachste Kompensationsfunktion, mit der dies erreicht werden kann, ist das dargestellte Polygon. Dieses weist neben den beiden Randwerten der linearen Kompensation noch einen weiteren mittlerer Stützpunkt auf der durch das negative Extremum $\underline{v}$ bestimmt wird, siehe die drei mit soliden Rauten markierten Punkte. Jedoch sind hier auch weitere Kompensationsfunktionen möglich, z.B. ein Polynom, solange sie durch die drei erwähnten Punkte laufen.

Eine ganz analoge Betrachtung kann erfolgen, wenn die Schätzgeschwindigkeit im Ausfallzeitraum die anzunehmende Höchstgeschwindigkeit $v_{limit}$ des Fahrzeugs übersteigt. Hier wäre dann im Kompensationsprofil an der Stelle des ermittelten Maximums $\overline{v}$ ein negativer Zwangspunkt mit dem Wert $V_{limit}$ - $\overline{v}$ zu setzen.

In Stillstandsphasen, z.B. detektiert aus Messungen des Beschleunigungsgebers aufgrund eines sehr niedrigen Signalpegels, kann entsprechend für diese Phase eine Zwangsbedingung v=0 festgelegt werden. Mit dieser Situation kann ganz entsprechend so verfahren werden, als läge eine GPS-Geschwindigkeitsmessung mit v=0 vor, d.h. das Intervall der Geschwindigkeitsschätzung über Beschleunigungsgeber wird an dem Stillstandspunkt mit dem (rechten) Randwert v=0 abgeschlossen. Sollte das Fahrzeug weiterfahren, ohne dass der GPS-Empfang inzwischen wieder aufgenommen wurde, wird ein neues Schätzintervall mit dem (linken) Randwert $v_0$=0 begonnen, siehe Fig. 9.

Fig. 10 zeigt eine Intervallteilung bei der Geschwindigkeitsschätzung bei Stillstandserkennung während des GPS-Ausfalls im Szenario gemäß Fig. 8 und Fig. 9. Die Handhabung der Geschwindigkeits- und Wegstreckenschätzung während der beiden Intervalle ist identisch wie weiter oben dargestellt.

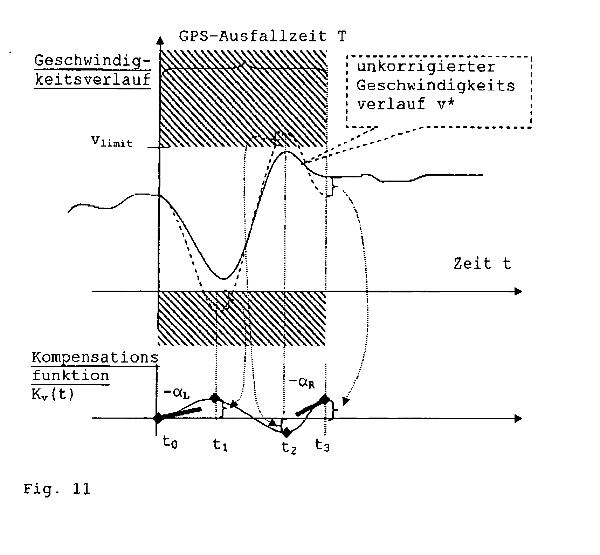

In Fig. 11 ist im unteren Teil eine Kompensationsfunktion der Geschwindigkeit mit verschiedenen Zwangsbedingungen dargestellt, nämlich links- und rechtsseitige Randwerte und - Steigungen sowie Zwischenpunkte bei Über/ Unterschreitung des sinnvollen Geschwindigkeitsbandes (symbolisiert durch solide Rauten). Der daraus summarisch kompensierte Geschwindigkeitsverlauf ist im oberen Teil mit einer durchgezogenen Linie dargestellt. Dabei sind unplausible Geschwindigkeitsbereiche strichliert eingezeichnet.

Die folgenden Bedingungen werden von der Kompensationsfunktion erfüllt. bei $t_0$:

- Startwert=0; d.h. Geschwindigkeitsschätzwert entspricht bei $t_0$ dem zuletzt gemessenen GPS-Geschwindigkeitswert

- Steigung = -$\alpha_L$ ; d.h. Beschleunigungsgeberoffset entspricht dem vor GPS-Ausfall ermittelten, 'linksseitigen' Randwert (symbolisiert durch die fette Linie)

bei $t_1$:

- Zwischenwert =-$\hat{v}(t_1)$; d.h. der unplausible negative Geschwindigkeitsschätzwert des Verlaufs $\hat{v}(t_1)$ wird auf Null angehoben.

bei $t_2$:

- Zwischenwert =$\hat{v}(t_2)$-$v_{limit}$; d.h. der unplausible zu hohe Geschwindigkeitsschätzwert des Verlaufs $\hat{v}(t_2)$ wird auf $v_{limit}$ abgesenkt

bei $t_3$:

- Endwert=$v_{GPS}(t_3)$; d.h. Geschwindigkeitsschätzwert entspricht bei $t_3$ dem dann wieder per GPS gemessenen Geschwindigkeitswert

- Steigung = -$\alpha_R$ ; d.h. Beschleunigungsgeberoffset entspricht dem nach GPS-Ausfall ermittelten, 'rechtsseitigen' Randwert (symbolisiert durch die fette Linie).

**Patentansprüche**

**1.** Verfahren zur fahrzeugseitigen Berechnung der Länge einer zurückgelegten Wegstrecke, wobei für Zeiträume der fahrzeugseitigen Verfügbarkeit Infrastrukturgestützter Positions- und/oder Geschwindigkeitsdaten die Länge der Wegstrecke aus den Positionsdaten bzw. über eine zeitliche Integration der Geschwindigkeitsdaten berechnet wird und für Zeiträume der Nichtverfügbarkeit dieser Daten zuerst ein Schätzgeschwindigkeitsverlauf durch zeitliche Integration fahrzeugseitig ermittelter Längsbeschleunigungswerte bestimmt wird, wobei bei anschließender Wiederverfügbarkeit dieser Daten zur Ableitung einer Offsetkompensation ein Vergleich zwischen Schätzgeschwindigkeitswerten und Geschwindigkeitsdaten durchgeführt wird

**dadurch gekennzeichnet, dass**
eine summarische Offsetkompensation derart erfolgt, dass Schätzgeschwindigkeitswerte und Geschwindigkeitsdaten zum Beginn und zum Ende des Zeitraums der Nichtverfügbarkeit übereinstimmen, und anschließend die Länge der Wegstrecke als Summe aus der zeitlichen Integration des Schätzgeschwindigkeitsverlaufs und der Offsetkompensation berechnet wird.

2. Verfahren nach Anspruch 1, wobei sich die zeitliche Integration vom Beginn des Zeitraums der Verfügbarkeit und/oder Nichtverfügbarkeit der Daten bis zu dessen Ende erstreckt.

3. Verfahren nach Anspruch 2, wobei die summarische Offsetkompensation als Quotient des summarischen Geschwindigkeitsfehlers $\Delta v$ - als der Differenz zwischen Schätzgeschwindigkeitsverlauf und Geschwindigkeitsdaten zum Zeitpunkt des Endes der Nichtverfügbarkeit der Daten - und der Nichtverfügbarkeitszeitdauer T der Daten abgeleitet wird, womit sich die Länge der Wegstrecke $\hat{s}^{**}(T)$ aus der zweimaligen zeitlichen Integration der Längsbeschleunigungswerte $\hat{a}(t)$, $\hat{s}(t)$, ergibt zu

$$\hat{s}^{\bullet\bullet}(T) = \hat{s}(T) - \frac{\Delta vT}{2}.$$

4. Verfahren nach einem der vorhergehenden Ansprüche, wobei Werte des Schätzgeschwindigkeitsverlaufs, die negativ und/oder größer als die maximale Fahrzeuggeschwindigkeit sind, durch Summation der Offsetkompensation auf einen Wert von Null bzw. die maximale Fahrzeuggeschwindigkeit kompensiert werden.

5. Verfahren nach einem der vorhergehenden Ansprüche, wobei bei Detektion eines Fahrzeugstillstands die Schätzgeschwindigkeit zu Null bestimmt wird.

6. Verfahren nach einem der vorhergehenden Ansprüche, wobei eine Überprüfung derart vorgesehen ist, ob die berechnete Länge einer zurückgelegten Wegstrecke größer oder gleich der Entfernung zwischen den Position ist, zwischen denen diese Länge berechnet wurde.

7. Computerprogramm mit Programmcode-Mitteln, um alle Schritte eines Verfahrens nach einem der Ansprüche 1 bis 6 durchzuführen, wenn das Programm auf einem Computer ausgeführt wird.

8. Computerprogrammprodukt mit Programmcode-Mitteln, die auf einem computerlesbaren Datenträger gespeichert sind, um das Verfahren nach einem der Ansprüche 1 bis 6 durchzuführen, wenn das Computerprogrammprodukt auf einem Computer ausgeführt wird.

9. Vorrichtung zur fahrzeugseitigen Berechnung der Länge einer zurückgelegten Wegstrecke, umfassend einen Empfänger für drahtlos bereitgestellte Positions-und/oder Geschwindigkeitsbezogene Daten des Fahrzeugs, einen Beschleunigungsgeber zur Ermittlung von Längsbeschleunigungswerten sowie ein Rechenmittel, wobei das Rechenmittel derart eingerichtet ist, dass für den Fall der Verfügbarkeit der Daten die Länge der zurückgelegten Wegstrecke aus den Positionsbezogenen Daten bzw. über eine zeitliche Integration der Geschwindigkeitsbezogenen Daten berechenbar ist und dass beim Beginn der Nichtverfügbarkeit der Daten unter Verwendung ermittelter erster Offsetwerte des Beschleunigungsgebers eine Schätzgeschwindigkeit und/oder Wegstreckenschätzung durch fortlaufende ein- und/oder zweifache zeitliche Integration der Werte des Beschleunigungsgebers bestimmbar ist, sowie bei Ende der Nichtverfügbarkeit der Daten die zeitliche Integration stopbar ist und unter Verwendung ermittelter zweiter Offsetwerte des Beschleunigungsgebers eine Offsetkompensation ableitbar ist,
**dadurch gekennzeichnet, dass**
eine summarische Offsetkompensation derart erfolgt, dass Schätzgeschwindigkeitswerte und Geschwindigkeitsbezogene Daten zu Beginn und Ende der Nichtverfügbarkeit der Daten übereinstimmen, wobei die Länge der Wegstrecke als Summe aus der zeitlichen Integration des Schätzgeschwindigkeitsverlaufs und der Offsetkompensation berechenbar ist.

10. Vorrichtung nach Anspruch 9, wobei die Vorrichtung umfassend Empfänger, Beschleunigungsgeber und Rechenmittel in einem einzigen Gehäuse angeordnet und zusätzlich derart konfiguriert ist, dass sie eine Bestimmung von Straßenbenutzungsgebühren ermöglicht.

11. Vorrichtung nach Anspruch 9 oder 10, wobei die summarische Offsetkompensation als Konstante aus erstem und zweitem Offsetwert des Beschleunigungsgebers ableitbar ist.

**12.** Vorrichtung nach Anspruch 9 oder 10, wobei die summarische Offsetkompensation als analytische Funktion derart ableitbar ist, dass sie den Wert des ersten und zweiten Offsetwerts des Beschleunigungsgebers zu Beginn bzw. Ende der Nichtverfügbarkeit der Daten annimmt.

**Claims**

**1.** Method for the in-vehicle calculation of the length of a distance travelled, wherein, for periods of time of in-vehicle availability of infrastructure-supported position and/or speed data, the length of the distance is calculated from the position data or by way of a time-integration of the speed data and, for periods of time of non-availability of such data, an estimated speed progression is first determined by time-integration of longitudinal acceleration values detected in the vehicle, wherein, if data are once again available, a comparison is made between estimated speed values and speed data for deriving an offset compensation,
**characterised in that**
a summary offset compensation is obtained in such a way that estimated speed values and speed data coincide at the beginning and at the end of the period of time of non-availability and the length of the distance is then calculated from the time-integration of the estimated speed progression and the offset compensation.

**2.** Method according to claim 1, wherein the time-integration extends from the beginning of the period of time of availability and/or non-availability of the data to its end.

**3.** Method according to claim 2, wherein the summary offset compensation is derived as a quotient of the summary speed error $\Delta v$ - the difference between the estimated speed progression and the speed data at the time of the end of the non-availability of the data - and the non-availability period of time T of the data, the length of the distance $\hat{s}$ (T) resulting from the double time-integration of the longitudinal acceleration values $\hat{a}(t)$, $\hat{s}(t)$ as

$$\hat{s}^{\circ\circ}(T) = \hat{s}(T) - \frac{\Delta vT}{2} \ .$$

**4.** Method according to any of the preceding claims, wherein values of the estimated speed progression which are negative and/or higher than the maximum vehicle speed are compensated by summation of the offset compensation to a value of zero or the maximum vehicle speed respectively.

**5.** Method according to any of the preceding claims, wherein the estimated speed is determined as zero if it is detected that the vehicle is stationary.

**6.** Method according to any of the preceding claims, wherein a check is provided whether the estimated length of a distance travelled is more than or equal to the distance between the positions between which this length has been calculated.

**7.** Computer programme with programme code means for executing all steps of a method according to any of claims 1 to 6 if the programme is executed on a computer.

**8.** Computer programme with programme code means which are stored on a computer-readable data storage medium for executing the method according to any of claims 1 to 6 if the computer programme product is executed on a computer.

**9.** Device for the in-vehicle calculation of the length of a distance travelled, comprising a receiver for position- and/or speed-related vehicle data made available by wireless means, an acceleration transmitter for detecting longitudinal acceleration values and a calculating means, wherein the calculating means is configured such that, if the data are available, the length of the distance travelled can be calculated from the position-related data or by way of a time-integration of the speed-related data, and that, at the beginning of the non-availability of the data, an estimated speed and/or a distance estimate can be determined using detected first offset values of the acceleration transmitter by continuous single and/or double time-integration of the values of the acceleration transmitter, and wherein the time-integration can be stopped at the end of the non-availability of the data and an offset compensation can be derived using detected second offset values of the acceleration transmitter,
**characterised in that**
a summary offset compensation is obtained in such a way that estimated speed values and speed-related data coincide at the beginning and at the end of the period of time of non-availability of the data, wherein the length of the distance can be calculated as a sum from the time-integration of the estimated speed progression and the offset compensation.

10. Device according to claim 9, wherein the device comprising the receiver, the acceleration transmitter and the calculating means is accommodated in a single housing and in addition configured such that it allows tolls to be determined.

11. Device according to claim 9 or 10, wherein the summary offset compensation can be derived as a constant from the first and second offset values of the acceleration transducer.

12. Device according to claim 9 or 10, wherein the summary offset compensation can be derived as an analytical function in such a way that it adopts the value of the first and second offset values of the acceleration transducer at the beginning and/or at the end of the non-availability of the data.

**Revendications**

1. Procédé pour calculer côté véhicule la longueur d'une distance parcourue, pour des durées de la disponibilité côté véhicule des données relatives à la vitesse et / ou à la position supportées par une infrastructure la longueur du parcours étant calculée à partir des données de position ou par une intégration temporelle des données relatives à la vitesse et pour des durées de non-disponibilité de ces données une courbe de vitesse estimée étant d'abord déterminée par l'intégration temporelle côté véhicule de valeurs d'accélération longitudinale définies, lorsque lesdites données sont ensuite de nouveau disponibles pour la dérivation d'une compensation de décalage, les valeurs de vitesse estimée et les données de vitesse sont comparées, **caractérisé en ce qu'**une compensation de décalage sommaire est réalisée de telle sorte que des valeurs de vitesse estimée et des données de vitesse coïncident au début et à la fin de la durée de non-disponibilité et ensuite la longueur du parcours est calculée en tant que somme de l'intégration temporelle de la courbe de vitesse estimée et de la compensation de décalage.

2. Procédé selon la revendication 1, selon lequel l'intégration temporelle s'étend du début de la durée de disponibilité ou de non-disponibilité des données jusqu'à sa fin.

3. Procédé selon la revendication 2, selon lequel la compensation de décalage sommaire comme quotient de l'erreur de vitesse sommaire $\Delta v$ - est dérivée comme la différence entre la courbe de vitesse estimée et des données de vitesse au moment de la fin de la non-disponibilité des données et de la durée T de non-disponibilité des données, la longueur du parcours $\hat{s}_{\bullet\bullet}$ (T) à partir de la double intégration temporelle des valeurs d'accélération â(t), s(t) longitudinale s'exprime comme suit

$$\hat{s}^{\bullet\bullet} (T) = \hat{s}(T) - \frac{\Delta vT}{2}$$

4. Procédé selon l'une quelconque des revendications précédentes, selon lequel des valeurs de la courbe de vitesse estimée, qui sont négatives et / ou supérieures à la vitesse maximale du véhicule, sont compensées par l'addition de la compensation de décalage sur une valeur de zéro ou la vitesse de véhicule maximale.

5. Procédé selon l'une quelconque des revendications précédentes, lors de la détection d'un arrêt du véhicule la vitesse estimée est définie comme étant zéro.

6. Procédé selon l'une quelconque des revendications précédentes, selon lequel une vérification est prévue de telle sorte que si la longueur calculée d'une distance parcourue est supérieure ou égale à la distance entre les positions, la longueur entre celles-ci soit calculée.

**7.** Programme informatique avec des moyens de codage afin de procéder à l'ensemble des étapes d'un procédé selon l'une quelconque des revendications 1 à 6, lorsque le programme est exécuté sur un ordinateur.

**8.** Programme informatique avec des moyens de codage qui sont mémorisés sur un support de données lisible par ordinateur afin de mettre en oeuvre le procédé selon l'une quelconque des revendications 1 à 6, lorsque le programme informatique est exécuté sur un ordinateur.

**9.** Dispositif pour calculer côté véhicule la longueur d'une distance parcourue, comprenant un récepteur pour les données du véhicule relatives à la vitesse et / ou à la position mises à disposition par voie hertzienne, un accéléromètre pour déterminer les valeurs d'accélération longitudinale ainsi qu'un moyen de calcul, le moyen de calcul étant réglé de sorte qu'en cas de disponibilité des données, la longueur de la distance parcourue puisse être calculée à partir des données relatives à la position ou par une intégration temporelle des données relatives à la vitesse et au début de la non-disponibilité des données en utilisant les premières valeurs de décalage déterminées de l'accéléromètre une vitesse estimée et / ou une estimation de la distance puisse être déterminée par une intégration temporelle simple et / ou double des valeurs de l'accéléromètre, ainsi qu'à la fin de la non-disponibilité des données l'intégration temporelle puisse être stoppée et en utilisant les secondes données de décalage de l'accéléromètre une compensation de décalage puisse être dérivée, **caractérisé en ce qu'**une compensation de décalage sommaire est réalisée de telle sorte que des valeurs de vitesse estimées et des données relatives à la vitesse coïncident du début à la fin de la non-disponibilité des données, la longueur du parcours pouvant être calculée comme la somme de l'intégration temporelle de la courbe de vitesse estimée et de la compensation de décalage.

**10.** Dispositif selon la revendication 9, ledit dispositif comprenant un récepteur, un accéléromètre et un moyen de calcul logés dans un même boîtier et configuré en outre de telle sorte qu'il permette la détermination de droits de péage routier.

**11.** Dispositif selon la revendication 10, dans lequel la compensation de décalage sommaire peut être dérivée en tant que constante à partir de la première et de la seconde valeur de décalage de l'accéléromètre.

**12.** Dispositif selon la revendication 9 ou la revendication 10, dans lequel la compensation de décalage sommaire peut être dérivée en tant que fonction analytique de telle sorte qu'elle accepte la valeur de la première et de la seconde valeur de décalage de l'accéléromètre du début ou jusqu'à la fin de la non-disponibilité des données.

GPS verfügbar   GPS-Ausfall   GPS verfügbar

Verlauf A

Verlauf B

Fig. 1

GPS-Ausfallzeit T

tatsächliche
Geschwindigkeit v(t)

aus $\hat{a}(t)$ bestimmte
Geschwindigkeit $\hat{v}(t)$

wahre Beschleunigung a(t)
während der Ausfallzeit

Zeit

Offset α

T

ermittelte Beschleunigung $\hat{a}(t)$

Fig. 2

Zeitraum der Offset-Schätzung ($\alpha^* = ...$)

GPS-Ausfallzeit T

tatsächliche Geschwindigkeit v(t)

aus Integral über $\hat{a} - \alpha^*$ bestimmte Geschwindigkeit $\hat{v}^*$

wahre Beschleunigung a(t) während der Ausfallzeit

Zeit

T

offset-kompensierte Beschleunigung $\hat{a}^*(t) = \hat{a}(t) - \alpha^*$

Offset $\alpha^*$ (linksseitiger Schätzwert)

gemessene Beschleunigung a*(t)

Fig. 3

GPS-Ausfallzeit T

summarisch korrigierte Geschwindigkeit

$$\hat{v}^{**}(t) = \hat{v}(t) - \frac{\Delta v \cdot t}{T}$$

summarischer Geschwindigkeitsfehler $\Delta v$

aus Integral über $\hat{a}$ ermittelte Geschwindigkeit $\hat{v}$

wahre Beschleunigung a(t) in der Ausfallzeit

Zeit

T

summarisch kompensierte Beschleunigung

$$\hat{a}^{**} = \hat{a} - \frac{\Delta v}{T}$$

Fig. 4

GPS-Ausfallzeit T

als Konstante berechneter Offset $\hat{\alpha}^{**}$ des Beschleunigungsgebers

Zeit

T

realer Offsetverlauf des Beschleunigungsgebers

Fig. 5

GPS-Ausfallzeit T

summarischer Geschwindigkeitsfehler $\Delta v$

$a_L$     $-\Delta v$     $a_R$

Zeit t

T

als Polynom berechnete Schätzung für den Offset $\alpha(t)$ der Beschleunigung

Fig. 6

15

GPS-Ausfallzeit T

korrigierte
Geschwindigkeitsschätzung

aus $\alpha(t)$ berechnete
Geschwindigkeitskorrektur

$-\alpha_R$

Zeit t

$-\alpha_L$          T

Fig. 7

GPS-Ausfallzeit T

tatsächlicher
Geschwindigkeitsverlauf
v(t) mit Langsamfahrt

unkorrigierter
Geschwindigkeitsverlauf
$\hat{v}$ mit negativem Bereich

summarisch korrigierter
Geschwindigkeitsverlauf $\hat{v}^{**}(t)$

Zeit

$\underline{v}$          T

$\underline{t}$

Fig. 8

tatsächlicher
Geschwindigkeitsverlauf
v(t) mit Langsamfahrt

GPS-Ausfallzeit T

Geschwindigkeits
verlauf mit
Randkorrektur
und Kompensation
des negativen
Bereichs

unkorrigierter
Geschwindigkeitsverlauf
$\hat{v}(t)$

Kompensationsfunktion
$K_v(t)$

v

t

Zeit

Fig. 9

GPS-Ausfallzeit T

Kompensationsfunktion
$K_v(t)$ für Intervall 1

Stillstandsphase

Kompensationsfunktion
$K_v(t)$ für Intervall 2

Zeit

Intervall 1        Intervall 2

Fig. 10

Fig. 11

**EP 1 731 873 B1**

IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1046018 B1